# EUROPEAN PATENT APPLICATION

(11) **EP 4 586 505 A1**
(43) Date of publication of application: **16.07.2025**
(21) Application number: 23875240.6
(22) Date of filing: 05.10.2023
(51) Int. Cl.: H04B 1/401, H04B 1/04, H04B 1/50

(54) **METHOD FOR CONTROLLING OPERATION OF ANTENNA TO SUPPORT WI-FI AND CELLULAR BANDS AND ELECTRONIC DEVICES SUPPORTING SAME**

(30) Priority: 05.10.2022 KR 20220126748; 28.10.2022 KR 20220140818
(71) Applicant: Samsung Electronics Co., Ltd., Suwon-si, Gyeonggi-do 16677 (KR)
(72) Inventor: KIM, Sungsoo, Suwon-si Gyeonggi-do 16677 (KR); PARK, Soon, Suwon-si Gyeonggi-do 16677 (KR); OH, Hyeongjoo, Suwon-si Gyeonggi-do 16677 (KR); KIM, Byungjoon, Suwon-si Gyeonggi-do 16677 (KR); KIM, Yongyoun, Suwon-si Gyeonggi-do 16677 (KR); PARK, Sungkoo, Suwon-si Gyeonggi-do 16677 (KR)
(74) Representative: Gulde & Partner
(86) International application number: PCT/KR2023/015351
(87) International publication number: WO 2024/076178

(57) **Abstract**

According to one embodiment, provided is an electronic device comprising: one or more antennas; an RFFE including a multiplexer connected to each of the one or more antennas and an extractor connected to the multiplexer; an RFIC connected to the extractor; at least one communication processor operatively coupled to the RFIC; and an application processor operatively connected to the at least one communication processor, wherein the at least one communication processor is configured to: obtain a Wi-Fi status from the application processor; identify a cellular communication band for the one or more antennas; and control a first RFFE comprising a first extractor to cause the first extractor connected to a first antenna of the one or more antennas to switch, on the basis of the obtained Wi-Fi status and the identified cellular communication band. Other various embodiments are possible.

## Description

### [Technical Field]

Various embodiments of the disclosure relate to a method of controlling an antenna to support Wi-Fi and cellular bands, and an electronic device supporting the same

### [Background Art]

As the use of mobile terminals providing various functions has become widespread due to the recent advancement of mobile communication technology, efforts are being made to develop the 5G communication system to meet the increasing demand for wireless data traffic. In order to achieve a high data transmission rate, implementation of the 5G communication system in a higher frequency band (e.g., 25 to 60GHz) in addition to the frequency bands used in the 3G communication system and the long term evolution (LTE) communication system is under consideration.

For example, in order to mitigate path loss of radio waves and increase the propagation distance of radio waves in the mmWave band, beamforming, massive MIMO, full dimensional MIMO (FD-MIMO), array antenna, analog beamforming, and large scale antenna technologies are being discussed for the 5G communication system.

To transmit a signal from an electronic device to a communication network (e.g., a base station), data generated from a processor or a communication processor within the electronic device may be processed by a radio frequency integrated circuit (RFIC) and a radio frequency front end (RFFE) circuit, and then transmitted to the outside of the electronic device through at least one antenna. The electronic device may transmit a signal in a wireless fidelity (Wi-Fi) or cellular band through at least one antenna.

### [Detailed Description of the Invention]

### [Technical Solution]

According to an embodiment of the disclosure, an electronic device may include one or more antennas, an RFFE including a multiplexer connected to each of the one or more antennas and an extractor connected to the multiplexer, an RFIC connected to the extractor, at least one communication processor operatively connected to the RFIC, and an application processor operatively connected to the at least one communication processor. The at least one communication processor may be configured to obtain a Wi-Fi status from the application processor. The at least one communication processor may be configured to identify a band of cellular communication for the one or more antennas. The at least one communication processor may be configured to control a first RFFE including a first extractor connected to a first antenna among the one or more antennas to switch the first extractor, based on the obtained Wi-Fi status and the identified band of cellular communication.

According to an embodiment of the disclosure, a method of controlling an operation of one or more antennas in an electronic device may include obtaining a Wi-Fi status from an application processor. The method may include identifying a band of cellular communication for the one or more antennas. The method may include controlling a first RFFE including a first extractor connected to a first antenna among the one or more antennas to switch the first extractor, based on the obtained Wi-Fi status and the band of cellular communication.

According to an embodiment of the disclosure, in a non-transitory storage medium storing instructions, when executed by at least one circuit of an electronic device, the instructions may be configured to enable the electronic device to perform at least one operation. The at least one operation may include obtaining a Wi-Fi status from an application processor. The at least one operation may include identifying a band of cellular communication for one or more antennas. The at least one operation may include controlling a first RFFE including a first extractor connected to a first antenna among the one or more antennas included the electronic device to switch the first extractor, based on the obtained Wi-Fi status and the band of cellular communication.

The technical solutions according to an embodiment of the disclosure are not limited to those described above, and technical solutions not mentioned will be clearly understood by those skilled in the art from the specification and the attached drawings.

### [Brief Description of Drawings]

FIG. 1 is a block diagram illustrating an electronic device in a network environment according to embodiments.
FIG. 2A is a block diagram illustrating an electronic device for supporting legacy network communication and 5G network communication according to embodiments.
FIG. 2B is a block diagram illustrating an electronic device for supporting legacy network communication and 5G network communication according to embodiments.
FIG. 3 is a block diagram illustrating an electronic device according to an embodiment of the disclosure.
FIG. 4 is a diagram illustrating an example of one or more antennas included in a housing of an electronic device according to an embodiment of the disclosure.
FIG. 5 is a flowchart illustrating an operation of controlling an RFFE in an electronic device according to an embodiment of the disclosure.
FIG. 6A is a diagram illustrating an example in which an extractor operates in a first mode according to an embodiment of the disclosure.
FIG. 6B is a diagram illustrating an example in which an extractor is switched to a second mode according to an embodiment of the disclosure.
FIG. 7 is a flowchart illustrating an operation of determining a Wi-Fi status in an electronic device according to an embodiment of the disclosure.
FIG. 8 is a block diagram illustrating an antenna tuning circuit according to an embodiment of the disclosure.
FIG. 9 is a flowchart illustrating an operation of determining a tune code in an electronic device according to an embodiment of the disclosure.
FIG. 10 is a flowchart illustrating an operation of determining a tune code in an electronic device according to an embodiment of the disclosure.

### [Mode for Carrying out the Invention]

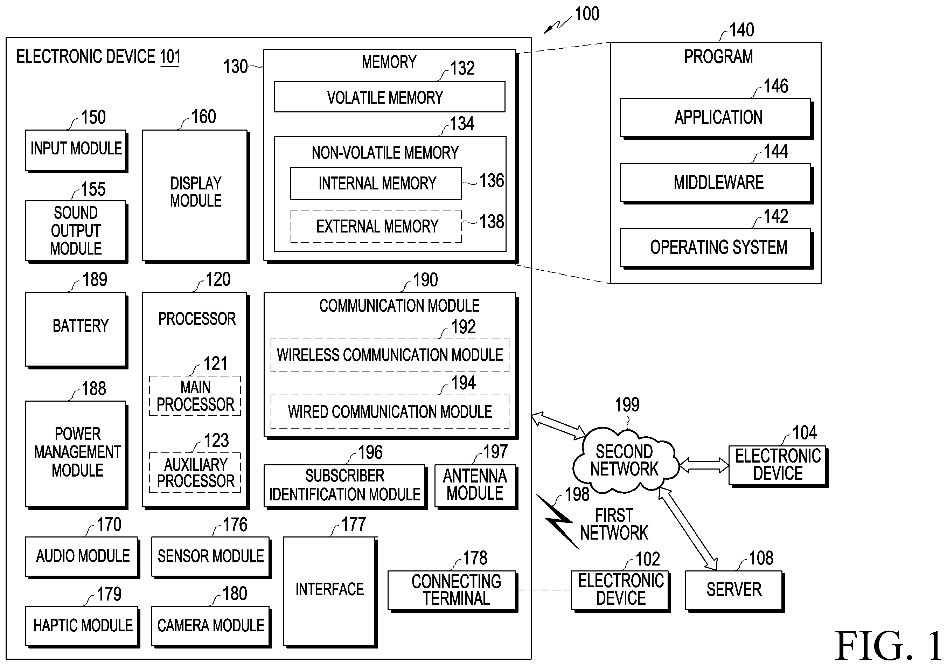

FIG. 1 is a block diagram illustrating an electronic device 101 in a network environment 100 according to an embodiment of the disclosure.

Referring to FIG. 1, the electronic device 101 in the network environment 100 may communicate with an electronic device 102 through a first network 198 (e.g., a short-range wireless communication network), or at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or through a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound through the input module 150, or output the sound through the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector through which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user through his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication through the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device through the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device through the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween through an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 through the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

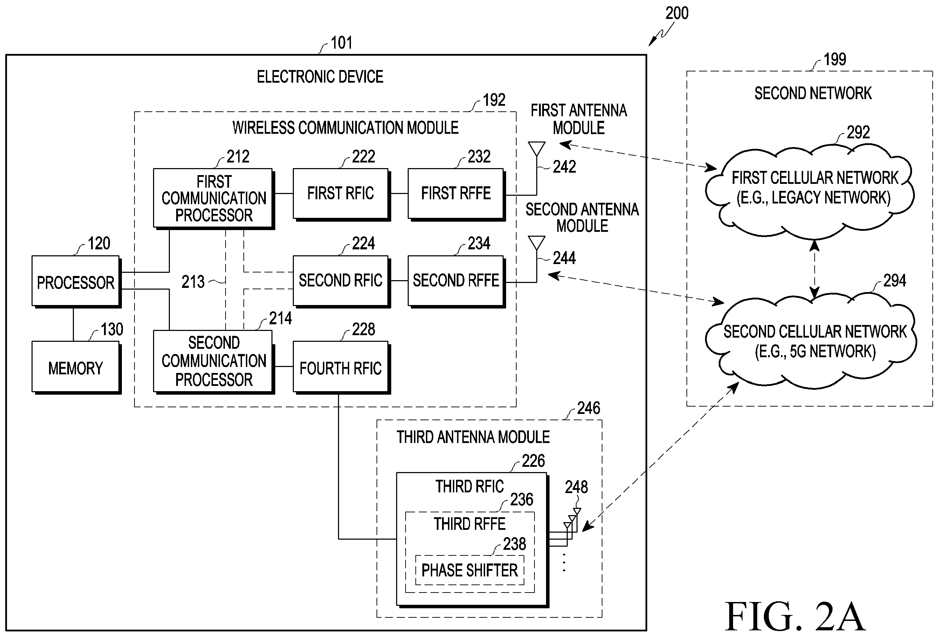

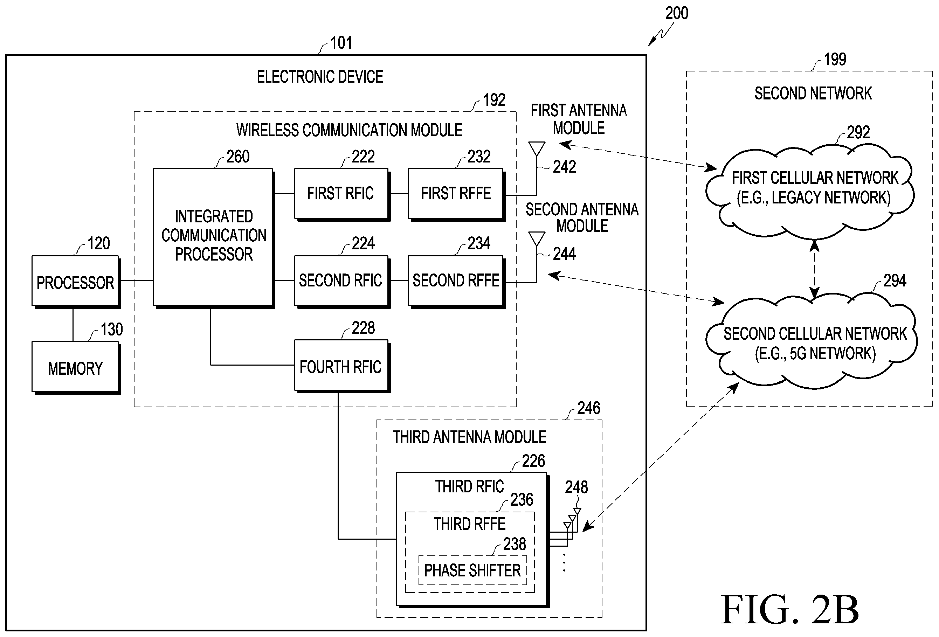

FIG. 2A is a block diagram illustrating an electronic device for supporting legacy network communication and 5G network communication according to embodiments. FIG. 2B is a block diagram illustrating an electronic device for supporting legacy network communication and 5G network communication according to embodiments.

Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. The second network 199 may include a first cellular network 292 and a second cellular network 294. According to an embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least a portion of the wireless communication module 192. According to another embodiment, the fourth RFIC 228 may be omitted or included as a portion of the third RFIC 226.

The first communication processor 212 may support establishment of a communication channel in a band to be used for wireless communication with the first cellular network 292 and legacy network communication through the established communication channel. According to embodiments, the first cellular network may be a legacy network including a 2^{nd} generation (2G), 3^{rd} generation (3G), 4^{th} generation (4G), or long term evolution (LTE) network. The second communication processor 214 may support establishment of a communication channel corresponding to a specified band (e.g., about 6GHz to about 60GHz) of a band to be used for wireless communication with the second cellular network 294 and 5G network communication through the established communication channel. According to embodiments, the second cellular network 294 may be a 5G network as defined by the 3GPP. Additionally, according to an embodiment, the first communication processor 212 or the second communication processor 214 may support establishment of a communication channel corresponding to another specified band (e.g., about 6GHz or below) of the band to be used for wireless communication with the second cellular network 294 and 5G network communication through the established communication channel.

The first communication processor 212 may transmit and receive data to and from the second communication processor 214. For example, data classified to be transmitted over the second cellular network 294 may be changed as data classified to be transmitted over the first cellular network 292. In this case, the first communication processor 212 may receive transmission data from the second communication processor 214. For example, the first communication processor 212 may transmit and receive data to and from the second communication processor 214 via an inter-processor interface 213. The inter-processor interface 213 may be implemented, for example, as, but not limited to, a universal asynchronous receiver/transmitter (UART) (e.g., high speed-UART (HS-UART)) or peripheral component interconnect bus express (PCIe) interface. Alternatively, the first communication processor 212 and the second communication processor 214 may exchange control information and packet data information, for example, using shared memory. The first communication processor 212 may transmit and receive various pieces of information, such as sensing information, information about an output strength, and resource block (RB) allocation information, to and from the second communication processor 214.

Depending on implementation, the first communication processor 212 may not be directly connected to the second communication processor 214. In this case, the first communication processor 212 may transmit and receive data to and from the second communication processor 214 through the processor 120 (e.g., an application processor). For example, the first communication processor 212 and the second communication processor 214 may communicate with the processor 120 (e.g., the application processor) through an HS-UART interface or a PCIe interface. However, the type of the interface is not limited. Alternatively, the first communication processor 212 and the second communication processor 214 may exchange control information and packet data information with the processor 120 (e.g., the application processor), using the shared memory.

According to an embodiment, the first communication processor 212 and the second communication processor 214 may be implemented on a single chip or within a single package. According to embodiments, the first communication processor 212 or the second communication processor 214 may be formed together with the processor 120, the auxiliary processor 123, or the communication module 190 on a single chip or within a single package. For example, as illustrated in FIG. 2B, a communication processor 260 may support all functions for communicating with both the first cellular network 292 and the second cellular network 294.

During transmission, the first RFIC 222 may convert a baseband signal generated by the first communication processor 212 into an RF signal at about 700MHz to about 3GHz used in the first cellular network 292 (e.g., a legacy network). During reception, an RF signal may be obtained from the first network 292 (e.g., the legacy network) through an antenna (e.g., the first antenna module 242) and preprocessed through an RFFE (e.g., the first RFFE 232). The first RFIC 222 may convert the preprocessed RF signal into a baseband signal to be processed by the first communication processor 212.

During transmission, the second RFIC 224 may convert a baseband signal generated by the first communication processor 212 or the second communication processor 214 into an RF signal in a Sub6 band (e.g., about 6GHz or below) (hereinafter, referred to as a 5G Sub6 RF signal) used in the second cellular network 294 (e.g., a 5G network). During reception, a 5G Sub6 RF signal may be obtained from the second cellular network 294 (e.g., the 5G network) through an antenna (e.g., the second antenna module 244) and preprocessed through an RFFE (e.g., the second RFFE 234). The second RFIC 224 may convert the preprocessed 5G Sub6 RF signal into a baseband signal to be processed by a corresponding one of the first communication processor 212 and the second communication processor 214.

The third RFIC 226 may convert a baseband signal generated by the second communication processor 214 into an RF signal in a 5G Above6 band (e.g., about 6GHz to about 60GHz) (hereinafter, referred to as a 5G Above6 RF signal), for use in the second cellular network 294 (e.g., the 5G network). During reception, a 5G Above6 RF signal may be obtained from the second cellular network 294 (e.g., the 5G network) through an antenna (e.g., the antennas 248) and preprocessed through the third RFFE 236. The third RFIC 226 may convert the preprocessed 5G Above6 RF signal into a baseband signal to be processed by the second communication processor 214. In an embodiment, the third RFFE 236 may be formed as a portion of the third RFIC 226.

According to an embodiment, the electronic device 101 may include the fourth RFIC 228 separately from or at least as a portion of the third RFIC 226. In this case, the fourth RFIC 228 may convert a baseband signal generated by the second communication processor 214 into an RF signal in an intermediate frequency band (e.g., about 9GHz to about 11GHz) (hereinafter, referred to as an IF signal) and then transmit the IF signal to the third RFIC 226. The third RFIC 226 may convert the IF signal into a 5G Above6 RF signal. During reception, a 5G Above6 RF signal may be received from the second cellular network 294 (e.g., the 5G network) through an antenna (e.g., the antennas 248) and converted into an IF signal by the third RFIC 226. The fourth RFIC 228 may convert the IF signal into a baseband signal to be processed by the second communication processor 214.

According to an embodiment, the first RFIC 222 and the second RFIC 224 may be implemented as at least a portion of a single chip or single package. According to an embodiment, when the first RFIC 222 and the second RFIC 224 in FIG. 2A or FIG. 2B are implemented on a single chip or in a single package, they may be implemented as an integrated RFIC. In this case, the integrated RFIC may be connected to the first RFFE 232 and the second RFFE 234, convert a baseband signal into a signal in a band supported by the first RFFE 232 and/or the second RFFE 234, and transmit the converted signal to one of the first RFFE 232 and the second RFFE 234. According to an embodiment, the first RFFE 232 and the second RFFE 234 may be implemented as at least a portion of a single chip or a single package. According to an embodiment, at least one of the first antenna module 242 or the second antenna module 244 may be omitted or combined with another antenna module to process RF signals in a corresponding plurality of bands.

According to an embodiment, the third RFIC 226 and the antennas 248 may be disposed on the same substrate to form the third antenna module 246. For example, the wireless communication module 192 or the processor 120 may be disposed on a first substrate (e.g., a main PCB). In this case, the third RFIC 226 may be disposed in a partial area (e.g., on the bottom surface) of a second substrate (e.g., a sub PCB) separate from the first substrate, and the antennas 248 may be disposed on another partial area (e.g., on the top surface) of the second substrate, thereby forming the third antenna module 246. It is possible to reduce the lengths of transmission lines between the third RFIC 226 and the antennas 248 by disposing them on the same substrate. This may reduce, for example, the loss (e.g., attenuation) of signals in a high frequency band (e.g., about 6GHz to about 60GHz) used for 5G network communication, caused by the transmission lines. Accordingly, the electronic device 101 may increase the quality or speed of communication with the second cellular network 294 (e.g., the 5G network).

According to an embodiment, the antennas 248 may be formed as an antenna array including a plurality of antenna elements that may be used for beamforming. In this case, the third RFIC 226 may include, for example, a plurality of phase shifters 238 corresponding to the plurality of antenna elements, as a portion of the third RFFE 236. During transmission, each of the plurality of phase shifters 238 may change the phase of a 5G Above6 RF signal to be transmitted to the outside of the electronic device 101 (e.g., to a BS in the 5G network) through a corresponding antenna element. During reception, each of the plurality of phase shifters 238 may convert the phase of a 5G Above6 RF signal received from the outside through a corresponding antenna element to the same or substantially the same phase. This enables transmission or reception through beamforming between the electronic device 101 and the outside.

The second cellular network 294 (e.g., the 5G network) may operate independently of the first cellular network 292 (e.g., the legacy network) (e.g., stand-alone (SA)) or may operate in conjunction with the first cellular network 292 (e.g., non-stand alone (NSA)). For example, the 5G network may only have an access network (e.g., a 5G radio access network (RAN) or a next generation RAN (NG RAN)) without a core network (e.g., a next generation core (NGC)). In this case, the electronic device 101 may access the access network of the 5G network and then access an external network (e.g., the Internet) under the control of a core network (e.g., an evolved packet core (EPC)) of the legacy network. Protocol information (e.g., LTE protocol information) for communication with the legacy network or protocol information (e.g., NR protocol information) for communication with the 5G network may be stored in the memory 230 and accessed by other components (e.g., the processor 120, the first communication processor 212, or the second communication processor 214).

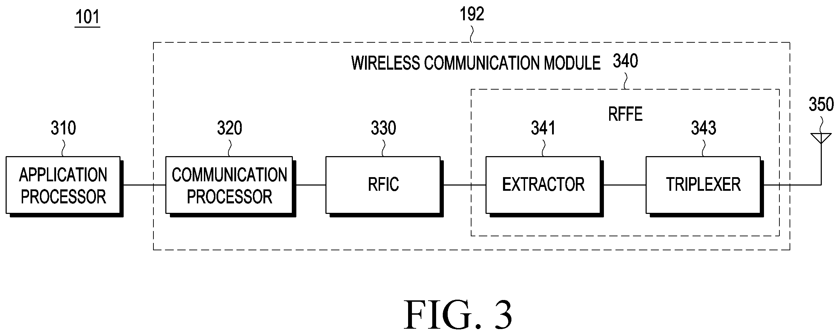

FIG. 3 is a block diagram illustrating the electronic device 101 (e.g., the electronic device 101 of FIG. 1) according to an embodiment of the disclosure.

Referring to FIG. 3, in an embodiment, the electronic device 101 may include at least one antenna 350, an RFFE 340 connected to the antenna 350, an RFIC 330 connected to the RFFE 340, at least one communication processor 320 operatively connected to the RFIC 330, and an application processor 310 operatively connected to the at least one communication processor 320. In an embodiment, the communication processor 320, the RFIC 330, and the RFFE 340 may form at least a portion of the wireless communication module 192.

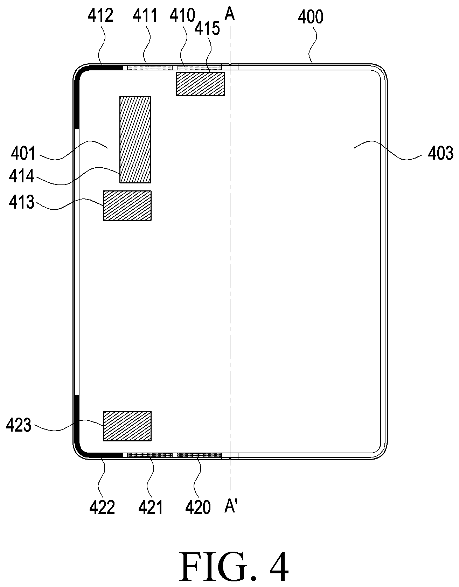

In an embodiment, the application processor 310 may be included in the processor 12 of FIG. 1. The application processor 310 may identify whether the electronic device 101 transmits a signal in a Wi-Fi band. For example, the application processor 310 may identify whether a Wi-Fi mode of the electronic device 101 is activated. The application processor 310 may determine a Wi-Fi status of the electronic device 101 based on whether the Wi-Fi mode is activated. The application processor 310 may transmit the determined Wi-Fi status to the communication processor 320. The operation of the application processor 310 will be described in more detail with reference to FIGS. 4 to 10.

In an embodiment, the communication processor 310 may be included in the processor 12 of FIG. 1. The communication processor 310 may control the overall operation of the antenna 350. For example, the communication processor 310 may control the operation of the antenna 350 by changing an operating state of the RFFE 340 through the RFIC 330. The operation of the communication processor 310 will be described in more detail with reference to FIGS. 4 to 10.

In an embodiment, the RFIC 330 may be included in the first RFIC 222, the second RFIC 224, the third RFIC 226, or the fourth RFIC 228 of FIG. 2A. During transmission, the RFIC 330 may convert a baseband signal generated by the communication processor 320 into an RF signal of about 700MHz to about 3GHz used in a first cellular network (e.g., the first cellular network 292 of FIG. 2) (e.g., a legacy network). During transmission, the RFIC 330 may convert a baseband signal generated by the communication processor 320 into an RF signal in an about 2.4GHz band used for Wi-Fi communication. During reception, an RF signal may be obtained from the first cellular network 292 (e.g., the legacy network) or a Wi-Fi network through the antenna 350 and preprocessed through the RFFE 340. The RFIC 330 may convert the preprocessed RF signal into a baseband signal to be processed by the first communication processor 212.

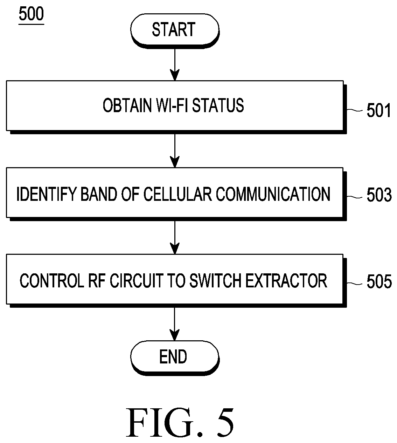

In an embodiment, the RFFE 340 may be included in the first RFFE 232, the second RFFE 234, or the third RFFE 236 of FIG. 2A. In an embodiment, the RFFE 340 may be an RFFE for preprocessing an RF signal of the Wi-Fi band. According to an embodiment of the disclosure, the "first RFFE" or the "second RFFE" is not limited to an RFFE (e.g., the first RFFE 232 or the second RFFE 234 of FIG. 2A) for preprocessing an RF signal obtained from a cellular network (e.g., the first cellular network 292 or the second cellular network 294 of FIG. 2). The RFFE 340 may include a multiplexer 343 connected to the antenna 350, and an extractor 341 connected to the multiplexer 343. The extractor 341 may transmit only a signal in a specific band to the RFIC 330 by switching. The switching operation of the extractor 341 will be described in more detail with reference to FIGS. 5 to 7. The multiplexer 343 may transmit a signal in a specific band selected from a signal including a plurality of bands to the extractor 341. The multiplexer 343 may be implemented as a diplexer or a triplexer, which should not be construed as limiting.

During transmission, the antenna 350 may transmit a signal in a specific band to the outside based on an RF signal converted by the RFIC 330. During reception, the antenna 350 may output an RF signal based on detecting a change in an electromagnetic field around it. Although the electronic device 101 is shown in FIG. 3 as including one antenna 350, the electronic device 101 may include a plurality of antennas 350.

FIG. 4 is a diagram illustrating an example of one or more antennas 410, 411, 412, 413, 414, 420, 421, 422, and 423 included in a housing 400 of an electronic device (e.g., the electronic device 101 of FIG. 1) according to an embodiment of the disclosure.

In an embodiment, the housing 400 of the electronic device 101 may be folded with respect to a folding line AA'. The housing 400 of the electronic device 101 may include a first housing 401 and a second housing 403 with respect to the folding line AA'. In an embodiment, a first antenna 410, a second antenna 420, a third antenna 411, a fourth antenna 412, a fifth antenna 413, a sixth antenna 414, a seventh antenna 421, an eighth antenna 422, or a ninth antenna 423 may be disposed on the housing 400 of the electronic device 101 or within the housing 400, and the arrangement locations thereof are not limited. For example, the first antenna 410, the second antenna 420, the third antenna 411, the fourth antenna 412, the fifth antenna 413, the sixth antenna 414, the seventh antenna 421, the eighth antenna 422, or the ninth antenna 423 may be implemented as a metal antenna on the first housing 401 or as a laser direct structuring LDS antenna within the first housing 401. Although the housing 400 of the electronic device 101 is shown in FIG. 4 as having a foldable structure, the housing 400 of the electronic device 101 may be implemented as a bar type or a slidable housing, which should not be construed as limiting.

In an embodiment, the electronic device 101 may transmit a signal in a Wi-Fi band and/or a signal in a cellular band through the first antenna 410, the second antenna 420, the third antenna 411, the fourth antenna 412, the fifth antenna 413, the sixth antenna 414, the seventh antenna 421, the eighth antenna 422, or the ninth antenna 423 disposed on the first housing 401. For example, the electronic device 101 may transmit a signal in a mid-high band (MHB), an ultra-high band (UHB), or a Wi-Fi band based on the first antenna 410. The electronic device 101 may transmit a signal in a cellular band corresponding to N77, N78, or N79 based on the second antenna 420. The electronic device 101 may transmit a signal in the UHB or an ultra-wide band (UWB) based on the third antenna 411. The electronic device 101 may transmit a signal in a cellular band corresponding to a low-band (LB), the MHB, N77, or N78 based on the fourth antenna 412. The electronic device 101 may transmit a signal in a cellular band corresponding to the UHB or N79 based on the fifth antenna 413. The electronic device 101 may transmit a signal in a Wi-Fi band based on the sixth antenna 414. The electronic device 101 may transmit a signal in the LB, a mid-band (MB), or a Wi-Fi band based on the seventh antenna 421. The electronic device 101 may transmit a cellular signal in the LB or MB based on the eighth antenna 422. The electronic device 101 may transmit a signal in the HB or Wi-Fi band based on the ninth antenna 423. The electronic device 101 may reduce a convolutional turbo code (CTC) signal transmitted from the first housing 401 to the second housing 403 by transmitting a signal in a Wi-Fi band using only the antennas disposed on the first housing 401. The reduction of the CTC signal in the electronic device 101 may reduce noise caused by the CTC signal. The electronic device 101 may transmit a signal in a Wi-Fi band using only the antennas disposed on the first housing 401, without a Wi-Fi module and an FEM inequality circuit disposed in the second housing 401.

In an embodiment, the electronic device 101 may transmit and/or receive a signal in a Wi-Fi band and/or a cellular band associated with the Wi-Fi band through the first antenna 410, the second antenna 420, the third antenna 411, the fourth antenna 412, the fifth antenna 413, the sixth antenna 414, the seventh antenna 421, the eighth antenna 422, or the ninth antenna 423. In an embodiment, during transmission, the electronic device 101 may change a signal classified to be transmitted through the first antenna 410 to be transmitted through the second antenna 420, based on Tx device hopping. For example, depending on an electric field, the electronic device 101 may determine a transmission path of a signal among the first antenna 410, the second antenna 420, the third antenna 411, the fourth antenna 412, the fifth antenna 413, the sixth antenna 414, the seventh antenna 421, the eighth antenna 422, or the ninth antenna 423.

FIG. 5 is a flowchart 500 illustrating an operation of controlling an RFFE (e.g., the RFFE 340 of FIG. 3) in an electronic device (e.g., the electronic device 101 of FIG. 1) according to an embodiment of the disclosure.

Referring to FIG. 5, in operation 501, in an embodiment, the electronic device 101 (e.g., the at least one communication processor 320 of FIG. 3) may obtain a Wi-Fi status from the application processor 310. In an embodiment, the Wi-Fi status may include information about whether the Wi-Fi mode is activated. The electronic device 101 may determine whether the Wi-Fi mode is activated based on the obtained Wi-Fi status.

In operation 503, in an embodiment, the electronic device 101 may identify a band of cellular communication for the one or more antennas 350. In an embodiment, the electronic device 101 may identify whether a first antenna (e.g., the first antenna 410 of FIG. 4) and/or a second antenna (e.g., the second antenna 420 of FIG. 4) transmits a signal in a band of cellular communication associated with a Wi-Fi band based on the identified band of cellular communication. In an embodiment, the electronic device 101 may identify whether the first antenna 410 and/or the second antenna 420 transmits a signal in a band of cellular communication which is not associated with the Wi-Fi band based on the identified band of cellular communication. For example, the Wi-Fi band may include about a 2.4GHz band. The band of cellular communication associated with the Wi-Fi band may include a band of about 2.3GHz to about 2.4GHz or a band of about 2.5GHz to 2.7GHz. The band of cellular communication not associated with the Wi-Fi band may include a band of about 1GHz or below. Specific values of the Wi-Fi band and the band of cellular communication are not limited to the example described above.

In operation 505, in an embodiment, the electronic device 101 may control an RF circuit (e.g., the RFFE 340 of FIG. 3) to switch an extractor (e.g., the extractor 341 of FIG. 3) connected to one of the antennas 350, based on the obtained Wi-Fi status and the identified band of cellular communication. For example, the electronic device 101 may control a first RFFE (e.g., the RFFE 340 of FIG. 3) including a first extractor (not shown) connected to the first antenna 410 to switch the first extractor, based on the obtained Wi-Fi status and the identified band of the cellular communication. The electronic device 101 may also control a second RFFE (e.g., the RFFE 340 of FIG. 3) including a second extractor (not shown) connected to the second antenna 420 to switch the second extractor, based on the obtained Wi-Fi status and the identified band of the cellular communication. In an embodiment, the second extractor may be referred to as a "first extractor", and the disclosure is not limited to the above-described example. In an embodiment, the second RFFE may be referred to as a "first RFFE", and the disclosure is not limited to the above-described example. The electronic device 101 may transmit and/or receive a signal in a Wi-Fi band and/or a signal in a cellular band through the same antenna based on the switching of the extractor 341. The electronic device 101 may be configured to include a simplified antenna structure by integrating an antenna that transmits a signal in the cellular band and an antenna that transmits a signal in the Wi-Fi band.

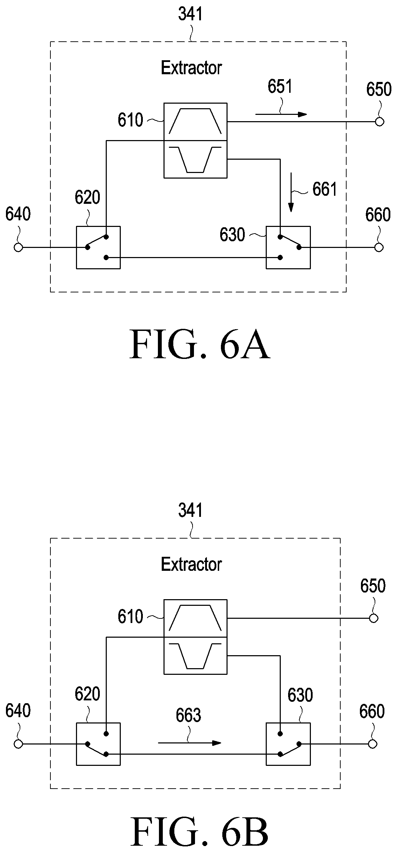

FIG. 6A is a diagram illustrating an example in which the extractor 341 operates in a first mode according to an embodiment of the disclosure.

Referring to FIG. 6A, in an embodiment, an electronic device (e.g., the electronic device 101 of FIG. 1) may identify whether an antenna (e.g., the antenna 350 of FIG. 3) transmits a signal in a Wi-Fi band, based on an obtained Wi-Fi status. The electronic device 101 (e.g., the communication processor 320 of FIG. 3) may control the RFFE (e.g., the RFFE 340 of FIG. 3) to switch the extractor 341 to the first mode, based on identifying that the antenna 350 transmits a signal in the Wi-Fi band. For example, the electronic device 101 may control the RFFE 340 to switch the first extractor connected to the first antenna (e.g., the first antenna 410 of FIG. 4) to the first mode based on the obtained Wi-Fi status. The electronic device 101 may also control the RFFE 340 to switch the second extractor connected to the second antenna (e.g., the second antenna 420 of FIG. 4) to the first mode, based on the obtained Wi-Fi status. In an embodiment, the first mode may be referred to as an "extractor mode."

Referring to FIG. 6A, when the extractor 341 operates in the first mode, a signal input through a first node 640 may pass through a filter 610 and be transmitted to a second node 650 or a third node 660. In an embodiment, the first node 640 may be connected to a multiplexer (e.g., the multiplexer 343 of FIG. 3). The second node 650 and/or the third node 660 may be connected to the RFIC 330. In an embodiment, an RF signal in a Wi-Fi band may pass through a first switch 620 and the filter 610 and be transmitted to the second node 650 through a first path 651. An RF signal in a cellular band may pass through a second switch 630 through the first switch 620 and the filter 610 and then be transmitted to the third node 660. In FIG. 6A, the signal input through the first node 640 is shown as being transmitted to the second node 650 or the third node 660. However, the directions in which the signal is transmitted is not limited to that illustrated in FIG. 6A. In an embodiment, the electronic device 101 may transmit and/or receive signals in the Wi-Fi band and the cellular band by controlling the RFFE 340 to operate the extractor 341 in the first mode.

FIG. 6B is a diagram illustrating an example in which the extractor 341 is switched to a second mode according to an embodiment of the disclosure.

Referring to FIG. 6B, in an embodiment, the electronic device 101 may identify whether the antenna 350 transmits a signal in a Wi-Fi band based on an obtained Wi-Fi status. The electronic device 101 may control the RFFE 340 to switch the extractor 341 to the second mode, based on identifying that the antenna 350 does not transmit a signal in the Wi-Fi band. For example, the electronic device 101 may control the RFFE 340 to switch the first extractor connected to the first antenna 410 to the second mode, based on the obtained Wi-Fi status. The electronic device 101 may also control the RFFE 340 to switch the second extractor connected to the second antenna 420 to the second mode, based on the obtained Wi-Fi status. In an embodiment, the second mode may be referred to as a "bypass mode."

Referring to FIG. 6B, when the extractor 341 operates in the second mode, a signal input through the first node 640 may pass through the second switch 630 through the first switch 620 and a third path 663 and then be transmitted to the third node 660. For example, an RF signal in a cellular band may pass through the second switch 630 through the first switch 620 and the third path 663 and then be transmitted to the third node 660. Although a signal input through the first node 640 is shown as being transmitted to the third node 660 in FIG. 6B, the direction in which the signal is transmitted is not limited to that illustrated in FIG. 6B. In an embodiment, the electronic device 101 may transmit and/or receive only a signal in the cellular band by controlling the RFFE 340 so that the extractor 341 operates in the second mode.

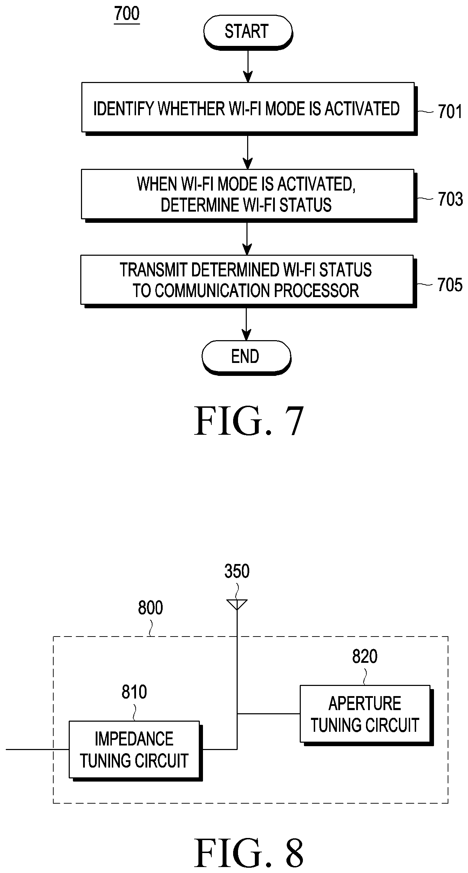

FIG. 7 is a flowchart 700 illustrating an operation of determining a Wi-Fi status in an electronic device (e.g., the electronic device 101 of FIG. 1) according to an embodiment of the disclosure.

Referring to FIG. 7, in operation 701, in an embodiment, the electronic device 101 (e.g., the application processor 120 of FIG. 3) may identify whether the Wi-Fi mode is activated. For example, the electronic device 101 may activate the Wi-Fi mode, based on identifying a connectable Wi-Fi network. The electronic device 101 may also activate the Wi-Fi mode by establishing a connection with a Wi-Fi network based on a user input. In an embodiment, the electronic device 101 may deactivate the Wi-Fi mode by disconnecting from the Wi-Fi network based on a user input.

In operation 703, in an embodiment, the electronic device 101 may determine the Wi-Fi status of the antenna 350 based on identifying whether the Wi-Fi mode is activated. For example, the electronic device 101 may determine a GPIO input that activates the first mode of the extractor 341 to be high, based on identifying that the Wi-Fi mode is activated. The electronic device 101 may determine the GPIO input that activates the first mode of the extractor 341 to be low, based on identifying that the Wi-Fi mode is not activated.

In operation 705, in an embodiment, the electronic device 101 may transmit the determined Wi-Fi status to the at least one communication processor 320. In an embodiment, the electronic device 101 may identify whether the communication processor 320 is turned on. The electronic device 101 may transmit the determined Wi-Fi status to the communication processor 320, based on identifying that the communication processor 320 is turned on.

FIG. 8 is a block diagram illustrating an antenna tuning circuit 800 according to an embodiment of the disclosure.

Referring to FIG. 8, the electronic device (e.g., electronic device 101 of FIG. 1) according to an embodiment of the disclosure may further include the antenna tuning circuit 800. The antenna tuning circuit 800 according to an embodiment may include at least one impedance tuning circuit 810 and/or at least one aperture tuning circuit 820. The impedance tuning circuit 810 according to an embodiment may be configured to perform impedance matching with a network under the control of at least one processor (e.g., the processor 120 of FIG. 2A, the communication processor 212 or 214 of FIG. 2A, and/or the integrated communication processor 260 of FIG. 2B). The aperture tuning circuit 820 according to an embodiment may change the structure of an antenna by turning a switch on/off under the control of the at least one processor.

As in FIG. 8, according to an embodiment, the impedance tuning circuit 810 may be connected to an RFFE (e.g., the RFFE 340 of FIG. 3) and connected to a multiplexer (e.g., the multiplexer 343 of FIG. 3) of the RFFE. The impedance tuning circuit 810 may be connected to the antenna 350, and the aperture tuning circuit 820 may be connected to a power rail connecting the impedance tuning circuit 810 and the antenna 350.

According to an embodiment, the electronic device 101 (e.g., the communication processor 320 of FIG. 3) may change a setting value of the antenna tuning circuit 800, depending on the strength (e.g., reference signal received power (RSRP) or signal to noise ratio (SNR)) of a received signal or whether imbalance occurs. In an embodiment, the electronic device 101 may control the on/off state of a switch included in the antenna tuning circuit 800 (e.g., the impedance tuning circuit 810 and/or the aperture tuning circuit 820) to be changed as described above, according to a change in the setting value of the antenna tuning circuit 800.

According to an embodiment, although a single impedance tuning circuit 810 and a single aperture tuning circuit 820 are shown in FIG. 8 as being connected to one antenna, either the impedance tuning circuit 810 or the aperture tuning circuit 820 may be omitted or a plurality of impedance tuning circuits 810 or a plurality of aperture tuning circuits 820 may be included, for one antenna.

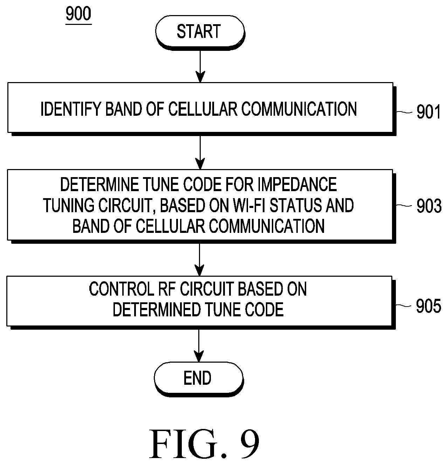

FIG. 9 is a flowchart 900 illustrating an operation of determining a tune code in an electronic device (e.g., the electronic device 101 of FIG. 1) according to an embodiment of the disclosure.

Referring to FIG. 9, in operation 901, in an embodiment, the electronic device 101 (e.g., the communication processor 320) may identify a band of cellular communication for the one or more antennas 350. Operation 901 is at least partially identical or similar to operation 503, and thus a detailed description thereof will be omitted.

In operation 903, in an embodiment, the electronic device 101 may determine a tune code for one or more impedance tuning circuits connected to the one or more antennas 350, based on an obtained Wi-Fi status and the identified band of cellular communication. In an embodiment, the electronic device 101 may determine a tune code for a first impedance tuning circuit (e.g., the impedance tuning circuit 810 of FIG. 8) connected to a first antenna (e.g., the first antenna 410 of FIG. 4) disposed on a top end of the electronic device 101, based on a tune code table of Table 1. Control parameters described in Table 1 are exemplary and are not limited.

**[Table 1]**

| No. | Scenario | | Wi-Fi | Tuner | Extractor | MHB | Wi-Fi |
|---|---|---|---|---|---|---|---|
| | | | (Top) | State (Top) | (Top) | Mod e | Mod e |
| | Wi-Fi | Cellular | | | | | |
| 1 | Wi-Fi | - | On | Wi-Fi | Extractor | Don't Care | 2×2 |
| 2 | - | MB/HB | Off | MHB | Bypass | 4×4 | Don't Care |
| 3 | Wi-Fi | LB | On | Wi-Fi | Extractor | Don't Care | 2×2 |
| 4 | Wi-Fi | MB/HB (no B40) | On | MHB & Wi-Fi | Extractor | 4×4 | 2×2 |
| 5 | Wi-Fi | B40 | On | MHB & Wi-Fi | Extractor | 4×4 | 2×2 |
| 6 | Wi-Fi | B40 (Tx hopp ing) | Off | MHB | Bypass | 4×4 | 1×1 |
| 7 | Wi-Fi | B40 (idle/mon itor) | On | Wi-Fi | Extractor | 4×4 | 2×2 |
| 8 | Wi-Fi | N40 | Off | MHB | Bypass | 4×4 | 1×1 |
| 9 | Wi-Fi | N40 (Tx hopp ing) | On | MHB & Wi-Fi | Extractor | 4×4 | 2×2 |
| 10 | Wi-Fi | N40 (idle/mon itor) | On | MHB & Wi-Fi | Extractor | 4×4 | 2×2 |

In an embodiment, referring to Table 1, the Wi-Fi (Top) field may include information about whether the first antenna 410 disposed at the top end of the electronic device 101 transmits a signal in a Wi-Fi band. The Extractor (Top) field may include information about the operating state of the first extractor connected to the first antenna 410. Based on identifying that the first antenna 410 transmits a signal in the Wi-Fi band (e.g., On), the electronic device 101 may control the RFFE (e.g., the RFFE 340 of FIG. 3) to switch the first extractor connected to the first antenna 410 to the first mode (e.g., Extractor). Based on identifying that the first antenna 410 does not transmit a signal in the Wi-Fi band (e.g., Off), the electronic device 101 may control the RFFE 340 to switch the first extractor connected to the first antenna 410 to the second mode (e.g., Bypass).

In an embodiment, referring to Table 1, the Wi-Fi Mode field may include information about the number of antennas transmitting signals in the Wi-Fi band out of the first antenna 410 and the second antenna 420. In an embodiment, 2×2 may be a state in which the first antenna 410 and the second antenna 420 transmit signals in the Wi-Fi band. 1×1 may be a state in which the first antenna 410 or the second antenna 420 transmits a signal in the Wi-Fi band. Don't Care may be a state in which the first antenna 420 and the second antenna 420 do not transmit signals in the Wi-Fi band.

In an embodiment, referring to Table 1, the Scenario field may include information about the frequency band of a signal transmitted and/or received by the electronic device 101. In an embodiment, the electronic device 101 may not transmit a signal in the cellular band in a first scenario. In an embodiment, the electronic device 101 may transmit a signal in the mid-band and/or high-band in a second scenario. The mid-band may include a band of about 1GHz to about 3GHz. The high-band may include a band of about 3GHz to about 6GHz. In an embodiment, the electronic device 101 may transmit a signal of the low-band in a third scenario. The low-band may include a band of about 1GHz or less. In an embodiment, the electronic device 101 may transmit a signal of the mid-band and/or high-band excluding a B40 band through the second antenna 410 at a bottom end in a fourth scenario. The B40 band may include a band of about 2.3GHz to about 2.4GHz. In an embodiment, the electronic device 101 may transmit a signal in the B40 band in a fifth scenario. In an embodiment, the electronic device 101 may transmit a signal in the B40 band based on Tx device hopping in a sixth scenario. In an embodiment, the electronic device 101 may not transmit a signal in the B40 band in an idle or monitor state in a seventh scenario. In an embodiment, the electronic device 101 may transmit a signal in an N40 band in an eighth scenario. The N40 band may include a band of about 2.3GHz to about 2.4GHz. In an embodiment, the electronic device 101 may transmit a signal in the N40 band through the first antenna 410 at the top end based on Tx device hopping in a ninth scenario. In an embodiment, the electronic device 101 may not transmit a signal in the N40 band in the idle or monitor state in a tenth scenario.

In an embodiment, referring to Table 1, the MHB Mode field may include information about the number of antennas that transmit signals in a cellular band associated with the Wi-Fi band out of the first antenna 410 and the second antenna 420. In an embodiment, 4x4 may be a state in which the first antenna 410 and the second antenna 420 may transmit signals in the cellular band associated with the Wi-Fi band. Don't Care may be a state in which the first antenna 420 and the second antenna 420 do not transmit signals in the cellular band associated with the Wi-Fi band.

In an embodiment, referring to Table 1, the Tuner State (Top) field may include information about a tune code for the first impedance tuning circuit connected to the first antenna 410. In an embodiment, the electronic device 101 may identify whether the at least one antenna 350 transmits a signal in the Wi-Fi band based on the obtained Wi-Fi status. The electronic device 101 may identify whether the at least one antenna 350 transmits a signal in the cellular band associated with the Wi-Fi band based on the identified band of cellular communication. The electronic device 101 may identify a scenario for the at least one antenna 350 based on the tune code table. In an embodiment, the electronic device 101 may transmit and/or receive an RF signal in a Wi-Fi band corresponding to the mid-band or the high-band through the at least one antenna 350. For example, the electronic device 101 may transmit and/or receive an RF signal in a Wi-Fi band corresponding to about 5GHz to about 6GHz through the first antenna 410 or the second antenna 420. The electronic device 101 may give priority to cellular communication of the first antenna 410 or the second antenna 420, based on identifying that the first antenna 410 or the second antenna 420 transmits a signal in the N40 or B40 band.

In an embodiment, the electronic device 101 may determine a tune code that switches the impedance tuning circuit 810 to a first state, based on identifying that the at least one antenna 350 transmits signals in a Wi-Fi band and a cellular band associated with the Wi-Fi band. For example, referring to the second scenario, the sixth scenario, and the eighth scenario of Table 1, the electronic device 101 may determine a tune code MHB of the cellular band for the first antenna 410 to give priority to the cellular communication of the first antenna 410 at the top end.

In an embodiment, the electronic device 101 may determine a tune code that switches the impedance tuning circuit 810 to a second state, based on identifying that at least one antenna 350 transmits a signal in a Wi-Fi band and does not transmit a signal in a cellular band associated with the Wi-Fi band. For example, referring to the fourth scenario, the fifth scenario, and the ninth scenario of Table 1, the electronic device 101 may determine a tune code MHB & Wi-Fi of the cellular and Wi-Fi bands for the first antenna 410, since there is no interference between communication in the Wi-Fi band of the first antenna 410 at the top end and communication in the cellular band of the second antenna 420 at the bottom end. In an embodiment, the electronic device 101 may determine the tune code MHB & Wi-Fi of the cellular and Wi-Fi bands for monitoring a signal in the cellular band in the tenth scenario.

In an embodiment, the electronic device 101 may determine a tune code that switches the impedance tuning circuit 810 to a third state, based on identifying that at least one antenna 350 does not transmit a signal in a Wi-Fi band and transmits a signal in a cellular band associated with the Wi-Fi band. For example, referring to the first scenario, the third scenario, and the seventh scenario of Table 1, the electronic device 101 may determine a tune code Wi-Fi of the Wi-Fi band for the first antenna 410, for communication in the Wi-Fi band of the first antenna 410 at the top end.

In an embodiment, the electronic device 101 may determine a tune code for each of the first impedance tuning circuit connected to the first antenna 410 disposed at the top end of the electronic device 101 and the second impedance tuning circuit connected to the second antenna 420 disposed at the bottom end of the electronic device 101, based on a tune code table of Table 2. The electronic device 101 determines a tune code in at least partially the same or similar manner to Table 1, and thus, a redundant description is omitted. Control parameters described in Table 2 are exemplary and are not limited.

**[Table 2]**

| No. | Scenario | | Wi-Fi (Top) | Tuner S t a t e (Top) | Extract or 1 (Top) | Wi-Fi 2 (Botto m ) | Tuner St ate (Botto m) | Extract or 2 (Botto m) | MHB M od e | Wi-Fi M o d e |
|---|---|---|---|---|---|---|---|---|---|---|
| | Wi-Fi | Cellular | | | | | | | | |
| 1 | Wi-Fi | - | On | Wi-Fi 1 | Extract or | On | Wi-Fi 2 | Extract or | Don't Ca re | 2×2 |
| 2 | - | MB/HB | Off | MHB | Bypass | Off | MHB | Bypass | 4×4 | Don't C a r e |
| 3 | Wi-Fi | LB | On | Wi-Fi 1 | Extract or | On | Wi-Fi 2 | Extract or | Don't Ca re | 2×2 |
| 4 | Wi-Fi | MB/HB( no B40 ) | On | MHB & W iF i 1 | Extract or | On | MHB & W i-Fi 2 | Extract or | 4×4 | 2×2 |
| 5 | Wi-Fi | B40 | On | MHB & W iF i 1 | Extract or | Off | MHB & W i-Fi 2 | Extract or | 4×4 | 1×1 |
| 6 | Wi-Fi | B40(Tx hop pin g) | Off | MHB | Bypass | On | MHB Rx & W i-Fi 2 | Extract or | 4×4 | 1×1 |
| 7 | Wi-Fi | B40(idle /mo nito r) | On | Wi-Fi 1 | Extract or | On | Wi-Fi 2 | Extract or | 2×2 | 2×2 |
| 8 | Wi-Fi | N40 | Off | MHB | Bypass | On | MHB & W i-Fi 2 | Extract or | 4×4 | 1×1 |
| 9 | Wi-Fi | N40(Tx hop pin g) | On | MHB & W iF i 1 | Extract or | Off | MHB & W i-Fi 2 | Extract or | 4×4 | 1×1 |
| 10 | Wi-Fi | N40(idle /mo nito r) | On | MHB & W iF i 1 | Extract or | On | MHB & W i-Fi 2 | Extract or | 2×2 | 2×2 |

In operation 905, in an embodiment, the electronic device 101 may control the RFFE 340 to switch the impedance tuning circuit 810, based on the determined tune code. In an embodiment, the electronic device 101 may control the RFFE 340 to switch the impedance tuning circuit 810 to the first state, based on identifying that the at least one antenna 350 transmits a signal in the Wi-Fi band and the cellular band associated with the Wi-Fi band. In an embodiment, the electronic device 101 may control the RFFE 340 to switch the impedance tuning circuit 810 to the second state, based on identifying that the at least one antenna 350 transmits a signal in the Wi-Fi band and does not transmit a signal in the cellular band associated with the Wi-Fi band. In an embodiment, the electronic device 101 may control the RFFE 340 to switch the impedance tuning circuit 810 to the third state, based on identifying that the at least one antenna 350 does not transmit a signal in the Wi-Fi band and transmits a signal in the cellular band associated with the Wi-Fi band. When the antenna 350 transmits a signal in the cellular band and/or the Wi-Fi band, the electronic device 101 may maintain antenna performance by controlling the RFFE 340.

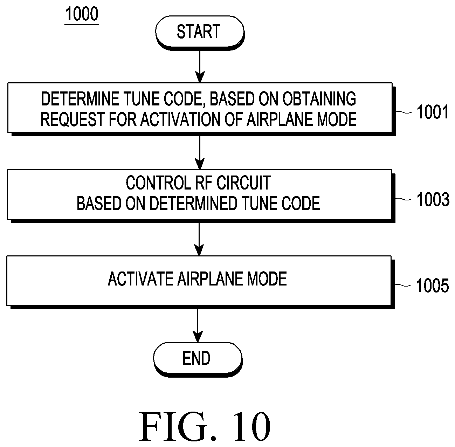

FIG. 10 is a flowchart 1000 illustrating an operation of determining a tune code in an electronic device (e.g., the electronic device 101 of FIG. 1) according to an embodiment of the disclosure.

Referring to FIG. 10, in operation 1001, in an embodiment, the electronic device 101 (e.g., the at least one communication processor 320 of FIG. 3) may determine a tune code for the impedance tuning circuit 810, based on obtaining a request for activating an airplane mode. In an embodiment, the airplane mode may be a state in which a connection between the electronic device 101 and a cellular network (e.g., the first cellular network 292 or the second cellular network 294) is released. For example, the electronic device 101 may determine the tune code corresponding to the first scenario of Table 1 as the tune code for the impedance tuning circuit 810 regardless of a Wi-Fi status, based on obtaining the request for activating the airplane mode.

In operation 1003, in an embodiment, the electronic device 101 may control the RFFE 340 to switch the impedance tuning circuit 810 to the second state, based on the determined tune code. In an embodiment, the electronic device 101 may improve the performance of the first antenna (e.g., the first antenna 410 of FIG. 4) for transmitting and/or receiving a signal in a Wi-Fi band by controlling the RFFE 340.

In operation 1005, in an embodiment, the electronic device 101 (e.g., the application processor 120 of FIG. 3) may activate the airplane mode, based on identifying that the at least one communication processor 320 is turned off. In an embodiment, the communication processor 320 may be turned off after transmitting a control signal that switches the impedance tuning circuit 810 to the second state. In an embodiment, the application processor 120 may not transmit the Wi-Fi status to the communication processor 320, based on identifying that the communication processor 320 is turned off. The application processor 120 may transmit the Wi-Fi status to the communication processor 320, based on identifying that the airplane mode is deactivated. Based on identifying that the communication processor 320 is turned off, the electronic device 101 may activate the airplane mode, thereby improving the performance of the first antenna (e.g., the first antenna 410 of FIG. 4) for transmitting and/or receiving a signal in the Wi-Fi band in the airplane mode.

The electronic device (101) according to an embodiment of the disclosure may be configured to include the one or more antennas 197, 242, 244, 248, 350, 410, or 420, the RFFE 232, 234, 236, or 340 including a multiplexer connected to each of the one or more antennas 197, 242, 244, 248, 350, 410, or 420 and an extractor connected to the multiplexer, the RFIC 222, 224, 226, 228, or 330 connected to the extractor, the at least one communication processor 212, 214, 260, or 320 operatively connected to the RFIC 222, 224, 226, 228, or 330, and the application processor 120 or 310 operatively connected to the at least one communication processor 212, 214, 260, or 320. The electronic device 101 (e.g., the at least one communication processor 212, 214, 260, or 320) may be configured to obtain a Wi-Fi status from the application processor 120 or 310. The electronic device 101 may be configured to identify a band of cellular communication for the one or more antennas 197, 242, 244, 248, 350, 410, or 420. The electronic device 101 may be configured to control the first RFFE 340 including the first extractor 341 connected to the first antenna 197, 242, 244, 248, 350, 410, or 420 among the one or more antennas 197, 242, 244, 248, 350, 410, or 420 to switch the first extractor 341, based on the obtained Wi-Fi status and the identified band of cellular communication.

In an embodiment, the electronic device 101 (e.g., the application processor 120 or 310) may be configured to identify whether a Wi-Fi mode is activated. The electronic device 101 may be configured to, based on identifying that the Wi-Fi mode is activated, determine the Wi-Fi status for the one or more antennas 197, 242, 244, 248, 350, 410, or 420. The electronic device 101 may be configured to transmit the determined Wi-Fi status to the at least one communication processor 212, 214, 260, or 320.

In an embodiment, the electronic device 101 (e.g., the at least one communication processor 212, 214, 260, or 320) may be configured to identify whether the first antenna 197, 242, 244, 248, 350, 410, or 420 transmits a signal in a Wi-Fi band, based on the obtained Wi-Fi status. The electronic device 101 may be configured to, based on identifying that the first antenna 197, 242, 244, 248, 350, 410, or 420 transmits a signal in the Wi-Fi band, control the first RFFE 340 to switch the first extractor 341 to a first mode.

In an embodiment, the electronic device 101 (e.g., the at least one communication processor 212, 214, 260, or 320) may be configured to identify whether the first antenna 197, 242, 244, 248, 350, 410, or 420 transmits a signal in the Wi-Fi band, based on the obtained Wi-Fi status. The electronic device 101 may be configured to, based on identifying that the first antenna 197, 242, 244, 248, 350, 410, or 420 does not transmit a signal in the Wi-Fi band, control the first RFFE 340 to switch the first extractor 341 to a second mode.

In an embodiment, the electronic device 101 (e.g., the at least one communication processor 212, 214, 260, or 320) may be configured to, based on the obtained Wi-Fi status and the identified band of cellular communication, determine a tune code for one or more impedance tuning circuits connected to each of the one or more antennas 197, 242, 244, 248, 350, 410, or 420. The electronic device 101 may be configured to, based on the determined tune code, control the first RFFE 340 to switch a first impedance tuning circuit 810 connected to the first antenna 197, 242, 244, 248, 350, 410, or 420 among the one or more impedance tuning circuits.

In an embodiment, the electronic device 101 (e.g., the at least one communication processor 212, 214, 260, or 320) may be configured to, based on the obtained Wi-Fi status, identify whether the first antenna 197, 242, 244, 248, 350, 410, or 420 transmits a signal in the Wi-Fi band. The electronic device 101 may be configured to, based on the identified band of cellular communication, identify whether the first antenna 197, 242, 244, 248, 350, 410, or 420 transmits a signal in a cellular band associated with the Wi-Fi band. The electronic device 101 may be configured to, based on identifying that the first antenna 197, 242, 244, 248, 350, 410, or 420 transmits signals in the Wi-Fi band and the cellular band associated with the Wi-Fi band, control the first RFFE 340 to switch the first impedance tuning circuit 810 to a first state.

In an embodiment, the electronic device 101 (e.g., the at least one communication processor 212, 214, 260, or 320) may be configured to, based on the obtained Wi-Fi status, identify whether the first antenna 197, 242, 244, 248, 350, 410, or 420 transmits a signal in the Wi-Fi band. The electronic device 101 may be configured to, based on the identified band of cellular communication, identify whether the first antenna 197, 242, 244, 248, 350, 410, or 420 transmits a signal in the cellular band associated with the Wi-Fi band. The electronic device 101 may be configured to, based on identifying that the first antenna 197, 242, 244, 248, 350, 410, or 420 transmits a signal in the Wi-Fi band and does not transmit a signal in the cellular band associated with the Wi-Fi band, control the first RFFE 340 to switch the first impedance tuning circuit 810 to a second state.

In an embodiment, the electronic device 101 (e.g., the at least one communication processor 212, 214, 260, or 320) may be configured to, based on the obtained Wi-Fi status, identify whether the first antenna 197, 242, 244, 248, 350, 410, or 420 transmits a signal in the Wi-Fi band. The electronic device 101 may be configured to, based on the identified band of cellular communication, identify whether the first antenna 197, 242, 244, 248, 350, 410, or 420 transmits a signal in the cellular band associated with the Wi-Fi band. The electronic device 101 may be configured to, based on identifying that the first antenna 197, 242, 244, 248, 350, 410, or 420 does not transmit a signal in the Wi-Fi band and transmits a signal in the cellular band associated with the Wi-Fi band, control the first RFFE 340 to switch the first impedance tuning circuit 810 to a third state.

In an embodiment, the electronic device 101 (e.g., the at least one communication processor 212, 214, 260, or 320) may be configured to, based on obtaining a request for activation of an airplane mode, determine a tune code for the impedance tuning circuit 810. The electronic device 101 may be configured to, based on the determined tune code, control the first RFFE 340 to switch the impedance tuning circuit 810 to the second state.

In an embodiment, the electronic device 101 (e.g., the application processor 120 or 310) may be configured to activate the airplane mode, based on identifying that the at least one communication processor 212, 214, 260, or 320 is turned off.

A method of controlling an operation of the one or more antennas 197, 242, 244, 248, 350, 410, or 420 in the electronic device 101 according to an embodiment of the disclosure may include obtaining a Wi-Fi status from the application processor 120 or 310. The method may include identifying a band of cellular communication for the one or more antennas 197, 242, 244, 248, 350, 410, or 420. The method may include controlling the first RFFE 340 including the first extractor 341 connected to a first antenna 197, 242, 244, 248, 350, 410, or 420 among the one or more antennas 197, 242, 244, 248, 350, 410, or 420 to switch the first extractor 341, based on the obtained Wi-Fi status and the band of cellular communication.

In an embodiment, the method may further include identifying whether a Wi-Fi mode is activated. The method may further include, based on identifying that the Wi-Fi mode is activated, determining the Wi-Fi status for the one or more antennas 197, 242, 244, 248, 350, 410, or 420. The method may further include transmitting the determined Wi-Fi status to the at least one communication processor 212, 214, 260, or 320.

In an embodiment, controlling the first RFFE 240 to switch the first extractor 341 may include identifying whether the first antenna 197, 242, 244, 248, 350, 410, or 420 transmits a signal in a Wi-Fi band, based on the obtained Wi-Fi status. Controlling the first RFFE 240 to switch the first extractor 341 may include, based on identifying that the first antenna 197, 242, 244, 248, 350, 410, or 420 transmits a signal in the Wi-Fi band, controlling the first RFFE 340 to switch the first extractor 341 to a first mode.

In an embodiment, controlling the first RFFE 240 to switch the first extractor 341 may include identifying whether the first antenna 197, 242, 244, 248, 350, 410, or 420 transmits a signal in the Wi-Fi band, based on the obtained Wi-Fi status. Controlling the first RFFE 240 to switch the first extractor 341 may include, based on identifying that the first antenna 197, 242, 244, 248, 350, 410, or 420 does not transmit a signal in the Wi-Fi band, controlling the first RFFE 340 to switch the first extractor 341 to a second mode.

In an embodiment, the method may further include, based on the obtained Wi-Fi status and the identified band of cellular communication, determining a tune code for one or more impedance tuning circuits connected to each of the one or more antennas 197, 242, 244, 248, 350, 410, or 420. The method may further include, based on the determined tune code, controlling the first RFFE 340 to switch the first impedance tuning circuit 810 connected to the first antenna 197, 242, 244, 248, 350, 410, or 420 among the one or more impedance tuning circuits.

In an embodiment, determining the tune code for the impedance tuning circuits may include, based on the obtained Wi-Fi status, identifying whether the first antenna 197, 242, 244, 248, 350, 410, or 420 transmits a signal in the Wi-Fi band. Determining the tune code may include, based on the identified band of cellular communication, identifying whether the first antenna 197, 242, 244, 248, 350, 410, or 420 transmits a signal in the cellular band associated with the Wi-Fi band. Controlling the first RFFE 340 to switch the first impedance tuning circuit 810 may include, based on identifying that the first antenna 197, 242, 244, 248, 350, 410, or 420 transmits signals in the Wi-Fi band and the cellular band associated with the Wi-Fi band, controlling the first RFFE 340 to switch the first impedance tuning circuit 810 to a first state.

In an embodiment, determining the tune code for the impedance tuning circuits may include, based on the obtained Wi-Fi status, identifying whether the first antenna 197, 242, 244, 248, 350, 410, or 420 transmits a signal in the Wi-Fi band. Determining the tune code may include, based on the identified band of cellular communication, identifying whether the first antenna 197, 242, 244, 248, 350, 410, or 420 transmits a signal in the cellular band associated with the Wi-Fi band. Controlling the first RFFE 340 to switch the first impedance tuning circuit 810 may include, based on identifying that the first antenna 197, 242, 244, 248, 350, 410, or 420 transmits a signal in the Wi-Fi band and does not transmit a signal in the cellular band associated with the Wi-Fi band, controlling the first RFFE 340 to switch the first impedance tuning circuit 810 to a second state.

In an embodiment, determining the tune code for the impedance tuning circuits may include, based on the obtained Wi-Fi status, identifying whether the first antenna 197, 242, 244, 248, 350, 410, or 420 transmits a signal in the Wi-Fi band. Determining the tune code may include, based on the identified band of cellular communication, identifying whether the first antenna 197, 242, 244, 248, 350, 410, or 420 transmits a signal in the cellular band associated with the Wi-Fi band. Controlling the first RFFE 340 to switch the first impedance tuning circuit 810 may include, based on identifying that the first antenna 197, 242, 244, 248, 350, 410, or 420 does not transmit a signal in the Wi-Fi band and transmits a signal in the cellular band associated with the Wi-Fi band, controlling the first RFFE 340 to switch the first impedance tuning circuit 810 to a third state.

In an embodiment, the method may further include, based on obtaining a request for activation of an airplane mode, determining a tune code for the one or more impedance tuning circuits connected to each of the one or more antennas 197, 242, 244, 248, 350, 410, or 420. The method may further include, based on the determined tune code, controlling the first RFFE 340 to switch the first impedance tuning circuit 810 connected to the first antenna 197, 242, 244, 248, 350, 410, or 420 among the one or more impedance tuning circuits to the second state.

In an embodiment, the method may further include activating the airplane mode, based on identifying that the at least one communication processor 212, 214, 260, or 320 is turned off.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According embodiments, operations performed by the module, the program, or another component may be carried out sequentially, in parallel, repeatedly, or heuristically, or one or more of the operations may be executed in a different order or omitted, or one or more other operations may be added.

In addition, the data structure used in the above-described embodiment of the disclosure may be recorded on a computer-readable recording medium through various means. The computer-readable recording medium includes a storage medium such as a magnetic storage medium (e.g., ROM, floppy disk, hard disk, or the like) and an optical reading medium (e.g., CD-ROM, DVD, or the like).

The disclosure has been described above with respect to preferred embodiments thereof. Those skilled in the art will understand that the disclosure may be implemented in a modified form without departing from the essential characteristics of the disclosure. Therefore, the disclosed embodiments should be considered from an illustrative perspective rather than a limiting perspective. The scope of the disclosure is indicated not by the above description but by the claims, and all differences within their equivalents should be interpreted as encompassed in the disclosure.

## Claims

1. An electronic device (101) comprising:
one or more antennas (197; 242; 244; 248; 350; 410; 420);
an RFFE (232; 234; 236; 340) including a multiplexer connected to each of the one or more antennas (197; 242; 244; 248; 350; 410; 420) and an extractor connected to the multiplexer;
an RFIC (222; 224; 226; 228; 330) connected to the extractor;
at least one communication processor (212; 214; 260; 320) operatively connected to the RFIC (222; 224; 226; 228; 330); and
an application processor (120; 310) operatively connected to the at least one communication processor (212; 214; 260; 320),
wherein the at least one communication processor (212; 214; 260; 320) is configured to:
obtain a Wi-Fi status from the application processor (120; 310),
identify a band of cellular communication for the one or more antennas (197; 242; 244; 248; 350; 410; 420), and
control a first RFFE (340) including a first extractor (341) connected to a first antenna (197; 242; 244; 248; 350; 410; 420) among the one or more antennas (197; 242; 244; 248; 350; 410; 420) to switch the first extractor (341), based on the obtained Wi-Fi status and the identified band of cellular communication.

2. The electronic device (101) of claim 1, wherein the application processor (120; 310) is configured to:
identify whether a Wi-Fi mode is activated,
based on identifying the Wi-Fi mode being activated, determine the Wi-Fi status for the one or more antennas (197; 242; 244; 248; 350; 410; 420), and
transmit the determined Wi-Fi status to the at least one communication processor (212; 214; 260; 320).

3. The electronic device (101) of claim 1 or 2, wherein the at least one communication processor (212; 214; 260; 320) is configured to:
identify whether the first antenna (197; 242; 244; 248; 350; 410; 420) transmits a signal in a Wi-Fi band, based on the obtained Wi-Fi status, and
based on identifying the first antenna (197; 242; 244; 248; 350; 410; 420) transmitting a signal in the Wi-Fi band, control the first RFFE (340) to switch the first extractor (341) to a first mode.

4. The electronic device (101) of any one of claims 1 to 3, wherein the at least one communication processor (212; 214; 260; 320) is configured to:
identify whether the first antenna (197; 242; 244; 248; 350; 410; 420) transmits a signal in the Wi-Fi band, based on the obtained Wi-Fi status, and
based on identifying the first antenna (197; 242; 244; 248; 350; 410; 420) not transmitting a signal in the Wi-Fi band, control the first RFFE (340) to switch the first extractor (341) to a second mode.

5. The electronic device (101) of any one of claims 1 to 4, wherein the at least one communication processor (212; 214; 260; 320) is configured to:
based on the obtained Wi-Fi status and the identified band of cellular communication, determine a tune code for one or more impedance tuning circuits connected to each of the one or more antennas (197; 242; 244; 248; 350; 410; 420), and
based on the determined tune code, control the first RFFE (340) to switch a first impedance tuning circuit (810) connected to the first antenna (197; 242; 244; 248; 350; 410; 420) among the one or more impedance tuning circuits.

6. The electronic device (101) of any one of claims 1 to 5, wherein the at least one communication processor (212; 214; 260; 320) is configured to:
based on the obtained Wi-Fi status, identify whether the first antenna (197; 242; 244; 248; 350; 410; 420) transmits a signal in the Wi-Fi band,
based on the identified band of cellular communication, identify whether the first antenna (197; 242; 244; 248; 350; 410; 420) transmits a signal in a cellular band associated with the Wi-Fi band, and
based on identifying the first antenna (197; 242; 244; 248; 350; 410; 420) transmitting a signal in the Wi-Fi band and the cellular band associated with the Wi-Fi band, control the first RFFE (340) to switch the first impedance tuning circuit (810) to a first state.

7. The electronic device (101) of any one of claims 1 to 6, wherein the at least one communication processor (212; 214; 260; 320) is configured to:
based on the obtained Wi-Fi status, identify whether the first antenna (197; 242; 244; 248; 350; 410; 420) transmits a signal in the Wi-Fi band,
based on the identified band of cellular communication, identify whether the first antenna (197; 242; 244; 248; 350; 410; 420) transmits a signal in the cellular band associated with the Wi-Fi band, and
based on identifying the first antenna (197; 242; 244; 248; 350; 410; 420) transmitting a signal in the Wi-Fi band and does not transmit a signal in the cellular band associated with the Wi-Fi band, control the first RFFE (340) to switch the first impedance tuning circuit (810) to a second state.

8. The electronic device (101) of any one of claims 1 to 7, wherein the at least one communication processor (212; 214; 260; 320) is configured to:
based on the obtained Wi-Fi status, identify whether the first antenna (197; 242; 244; 248; 350; 410; 420) transmits a signal in the Wi-Fi band,
based on the identified band of cellular communication, identify whether the first antenna (197; 242; 244; 248; 350; 410; 420) transmits a signal in the cellular band associated with the Wi-Fi band, and
based on identifying the first antenna (197; 242; 244; 248; 350; 410; 420) not transmitting a signal in the Wi-Fi band and transmits a signal in the cellular band associated with the Wi-Fi band, control the first RFFE (340) to switch the first impedance tuning circuit (810) to a third state.

9. The electronic device (101) of any one of claims 1 to 8, wherein the at least one communication processor (212; 214; 260; 320) is configured to:
based on obtaining a request for activation of an airplane mode, determine a tune code for the impedance tuning circuit (810), and
based on the determined tune code, control the first RFFE (340) to switch the impedance tuning circuit (810) to the second state.

10. The electronic device (101) of any one of claims 1 to 9, wherein the application processor (120; 310) is configured to activate the airplane mode, based on identifying the at least one communication processor (212; 214; 260; 320) being turned off.

11. A method of controlling an operation of one or more antennas (197; 242; 244; 248; 350; 410; 420) in an electronic device (101), the method comprising:
obtaining a Wi-Fi status from an application processor (120; 310);
identifying a band of cellular communication for the one or more antennas (197; 242; 244; 248; 350; 410; 420); and
controlling a first RFFE (340) including a first extractor (341) connected to a first antenna (197; 242; 244; 248; 350; 410; 420) among the one or more antennas (197; 242; 244; 248; 350; 410; 420) to switch the first extractor (341), based on the obtained Wi-Fi status and the band of cellular communication.

12. The method of claim 11, further comprising:
identifying whether a Wi-Fi mode is activated;
based on identifying the Wi-Fi mode being activated, determining the Wi-Fi status for the one or more antennas (197; 242; 244; 248; 350; 410; 420); and
transmitting the determined Wi-Fi status to at least one communication processor (212; 214; 260; 320).

13. The method of claim 11 or 12, wherein controlling the first RFFE (240) to switch the first extractor (341) includes:
identifying whether the first antenna (197; 242; 244; 248; 350; 410; 420) transmits a signal in a Wi-Fi band, based on the obtained Wi-Fi status; and
based on identifying the first antenna (197; 242; 244; 248; 350; 410; 420) transmitting a signal in the Wi-Fi band, controlling the first RFFE (340) to switch the first extractor (341) to a first mode.

14. The method of any one of claims 11 to 13, wherein controlling the first RFFE (240) to switch the first extractor (341) includes:
identifying whether the first antenna (197; 242; 244; 248; 350; 410; 420) transmits a signal in the Wi-Fi band, based on the obtained Wi-Fi status; and
based on identifying the first antenna (197; 242; 244; 248; 350; 410; 420) not transmitting a signal in the Wi-Fi band, controlling the first RFFE (340) to switch the first extractor (341) to a second mode.

15. The method of any one of claims 11 to 14, further comprising:
based on the obtained Wi-Fi status and the identified band of cellular communication, determining a tune code for one or more impedance tuning circuits connected to each of the one or more antennas (197; 242; 244; 248; 350; 410; 420); and
based on the determined tune code, controlling the first RFFE (340) to switch a first impedance tuning circuit (810) connected to the first antenna (197; 242; 244; 248; 350; 410; 420) among the one or more impedance tuning circuits.
